# EUROPEAN PATENT APPLICATION

(11) **EP 1 263 194 A1**
(43) Date of publication of application: **04.12.2002**
(21) Application number: 01113283.4
(22) Date of filing: 31.05.2001
(51) Int. Cl.: H04M 1/03, H04R 1/00

(54) **Earpiece for a mobile communication device with acoustic filter integrated in the grommet**

(71) Applicant: Sony International (Europe) GmbH, 10785 Berlin (DE)
(72) Inventor: Lechner, Thomas, Digital Telecommunications Europe, 85609 Aschheim (DE)
(74) Representative: Körber, Martin, Dipl.-Phys.

(57) **Abstract**

The invention proposes a special design of the components of an earpiece for mobile communication devices providing an acoustic construction with a good sound quality both in volume and frequency response. The mobile communication device according to the present invention comprises a casing shell (2), an electrodynamic transducer (3) for generating acoustic signals mounted inside the casing shell (2), and a grommet (1) to acoustically isolate the electrodynamic transducer (3) from the casing shell (2), whereby the casing shell (2) comprises at least one acoustic opening (21) for allowing acoustic signals generated by the electrodynamic transducer (3) to pass through to the outside (44) of the casing shell (2), The grommet (1) is shaped to form a cavity (41) together with the electrodynamic transducer (3) for constituting an acoustic filter, and to form at least one acoustic leadthrough (17) for an acoustic connection between leak openings (23) of the casing shell (2) and an interior of the casing shell.

## Description

The invention relates in general to mobile communication devices, in particular to mobile phones having an earpiece integrated within the casing.

Earpieces integrated in mobile devices generally have to be constructed such, that the sound quality characterised by its volume and frequency distribution is in a wide range independent of the ear-telephone contact. Especially in the frequency range below 1 kHz the sound quality strongly depends on the acoustical load determined by the volume which has to be irradiated acoustically. For an auricle in close contact with the earpiece of the mobile device the acoustical load impedance is very high, while for an auricle loosely pressed against the earpiece, some leaks will reduce the level of the acoustical load.

Due to the general trend in the design of mobile communication devices of providing more and more functionality in casings continuously reduced in size, only very limited space is disposable for acoustical engineering. Therefore, the main tendency for improving the audio quality of the earpieces of mobile communication devices is directed to improve the leak tolerance. To achieve this, the acoustical impedance is lowered by coupling the front side of the membrane of the speaker either to a cavity, to free air or to the backside of the membrane. All openings in the earpiece with acoustic function have to be located inside the area of the auricle and the measurement coupler. This is usually a circle of 25mm in diameter. Due to the cosmetic design of the communication device, the available space is sometimes much smaller. In some special cases, leak openings in the surface of the earpiece, which lead to a cavity inside the device or to the backside of the membrane have to be at least partly positioned in front of the area of the speaker. Therefore the path from the speaker to the sound outlet opening has to be separated from the path leading back from the additional leak openings to a cavity inside the device or to the backside of the membrane.

In particular, the system proposed in EP 0 909 077 A2 provides a separate acoustic back volume attached to the backside of an electrodynamic transducer by arranging an RF-shield casing behind the earpiece. Leak holes in the RF-shield and in the supporting circuit board as well as in the mount of the speaker capsule allow an acoustical return-path between the front and the backside of the speaker membrane.

Likewise, the system introduced in WO 00/21330 suggests an opening in the casing of the mobile phone, whereby the opening is situated in an area of the casing covered by the concha at a regular usage. The opening offers an acoustical return path from the ear canal via an inner space of the telephone to the backside of the speaker capsule. Additionally a channel is formed which acoustically connects the speaker front to the outside of the mobile telephone which is usually not covered by the ear of the user.

Also in WO 98/24214 a number of an apertures in the telephone housing are proposed to create an acoustic connection to an interior cavity for the purpose to improve the leak tolerance of the earpiece.

In EP 0 967 772 A1 a channel formed within the casing shell of a mobile telephone connects the ear canal volume with the outside environment when the ear of the user is pressed against the earpiece of the mobile telephone.

To achieve a better audio quality for handsfree situations, WO 97/47117 proposes a communication terminal where the electrodynamic transducer is mounted within an especially designed enclosure comprising a front and a back chamber, each of which is especially adapted for shaping the frequency response of the earpiece. The transducer is mounted in an opening of the wall separating the two chambers. The main acoustic path is formed by openings in the top cover of the upper chamber while the return path is formed by leak openings on the side of the upper enclosure and openings on the rearside of the lower enclosure.

In addition to provide an acoustical shunt between the sound outlet and the backside of the speaker capsule and/or reducing the acoustic load by providing one or more leak paths to the environs of the mobile communication device, an acoustic filter will further improve the frequency response of the sound pressure. In particular, acoustic filters are often used to increase the transducer sensitivity at the high end of the transmission frequency range and to achieve a low pass filter with a cutoff frequency slightly above the transmission frequency range. The advantage of the low pass filter is a reduction of high frequency noise, distortion and out of band signals.

With respect to this, an earpiece cap proposed in the European Patent Application 00 122 462.5, optimises the audio quality of a mobile phones earpiece by providing an acoustic filter in addition to leak ducts to the phones exterior and return paths into the interior of a mobile phone

In general, for achieving an earpiece with good acoustic properties the prior art as cited above needs quite a number of mechanic parts and/or results in a complex assembly.

It is therefore an object of the present invention to provide a mobile communication device with an earpiece construction where the mechanic part count is reduced and the assembly is simplified.

This object is achieved by a mobile communication device comprising a casing shell, an electrodynamic transducer for generating acoustic signals mounted inside the casing shell, and a grommet for mechanically decoupling the electrodynamic transducer from the casing shell, whereby the casing shell comprises at least one acoustic opening for allowing acoustic signals generated by the electrodynamic transducer to pass through to the outside of the casing shell, characterised in that the grommet is shaped to form a cavity together with the electrodynamic transducer for constituting an acoustic filter, and to form at least one acoustic leadthrough for an acoustic connection between leak openings of the casing shell and an interior of the casing shell.

The earpiece according to the present invention advantageously relocates the particularities of the acoustical construction elements below the front casing shell of a mobile communication device, so that the exterior of the casing shell can to a large extend be modelled independent of acoustical considerations. By designing the grommet used to mount the speaker capsule to the front casing shell such, that the structural elements implementing the acoustic properties of an earpiece are integrated into the shape of the grommet, the number of elements used to construct an earpiece in a mobile communication device is reduced to the absolute minimum, thus simplifying the assembly of the earpiece.

Further advantageous features are claimed in the respective sub-claims.

An acoustic passage from the cavity formed by the electrodynamic transducer together with the grommet to an acoustic opening in the casing shell is preferably implemented by that surface of the grommet facing the inner surface of the casing shell comprising an elevation protruding from it with the elevation accommodating at least one opening so that the acoustic filter element is directly coupled to the acoustic opening in the casing shell. The elevation of the grommet may further be shaped to obturate the sound outlet formed by the one or more openings in the elevation together with the one or more acoustic openings in the casing shell from the environs inside the casing shell guaranteeing defined acoustic properties for the sound outlet. Advantageously, the elevation of the grommet represents a spacer for keeping the non-elevated part of the surface of the grommet facing the inner surface of the casing shell at a distance to this inner surface, such providing a volume within the mobile communication device connected to the leak openings of the casing shell.

In a preferred embodiment of the present invention, the grommet is made of material with elastic properties, for one allowing an easy assembly with the electrodynamic transducer mounted acoustically leakproof, and further providing a vibrational decoupling of the casing shell from the electrodynamic transducer.

Preferably, the inner surface of the casing shell is shaped to form a receptacle supporting the grommet on at least a part of its circumference, and further advantageously, the inner surface of the casing shell is shaped to form a receptacle providing one or more entryways to the leadthroughs of the grommet. Hereby, no extra effort for fixing the grommet to the casing shell is required and furthermore, the leak openings of the casing shell are acoustically connected to the interior of the mobile communication device. According to an advantageous further development, the entryways are shaped to form an acoustic impedance, allowing the design of defined acoustic shunt.

The surface of the grommet facing the inner surface of the casing shell preferably comprises reinforcing ribs improving the inherent stability of the cavity formed by the grommet together with the electrodynamic transducer mounted to it, thus ensuring stable acoustic properties by a rigid mechanical design.

In an advantageous embodiment of the present invention, the elevation of the surface of the grommet facing the inner surface of the casing shell comprises a sealing lip encompassing the openings forming the sound outlet. Thereby, the area representing the sealing surface is considerably reduced, causing higher pressures at the sealing surface thus providing a secure obturation of the sound outlet. Preferably, the sealing lip is shaped to provide a pliable contact to the inner surface of the casing shell, which adds further structural elasticity to the elasticity of the grommets material.

In a favoured embodiment of the present invention, the outer side wall rimming the grommet comprises rotationally asymmetric features to further simplify an assembly of the earpiece by preventing a maladjustment of the grommet. This rotational asymmetric feature may be implemented by an appendix, which e.g. is destined to fit in a respective recession in the casing shell, and/or by one or more recesses arranged rotationally asymmetric around the perimeter of the outer side wall rimming the grommet, and/or by a notch and/or by a bevelment of a part of an edge of the circumference, advantageously providing the desired asymmetry either without interfering with the acoustic consideration or by utilising the acoustic structural elements.

An earpiece according to the present invention may e.g. be implemented in a mobile telephone, a Personal Digital Assistant (PDA), a mobile computing device or a headset for mobile communication devices or the like.

In the following description, the present invention is explained in more detail in relation to the enclosed drawings, in which
Fig. 1 shows a mobile communication device according to the present invention,
Fig. 2 shows a top-side view of a grommet according to the present invention,
Fig. 3 shows the area around the earpiece on the inner side of a casing shell according to the present invention,
Fig. 4 shows the parts of an earpiece according to the present invention in an assembled state, and
Fig. 5 shows a vertical cross-section of an earpiece according to the present invention along the line A-A' indicated in Fig. 3.

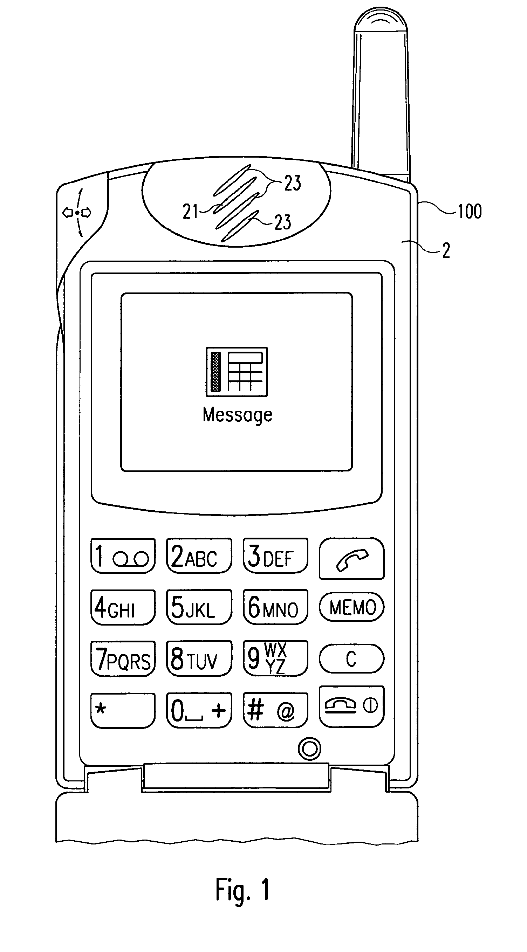

Fig. 1 is a top-view of the front side of a mobile communication device 100 according to the present invention, with the casing shell 2 containing an acoustic opening 21 and leak openings 23 within an earpiece area.

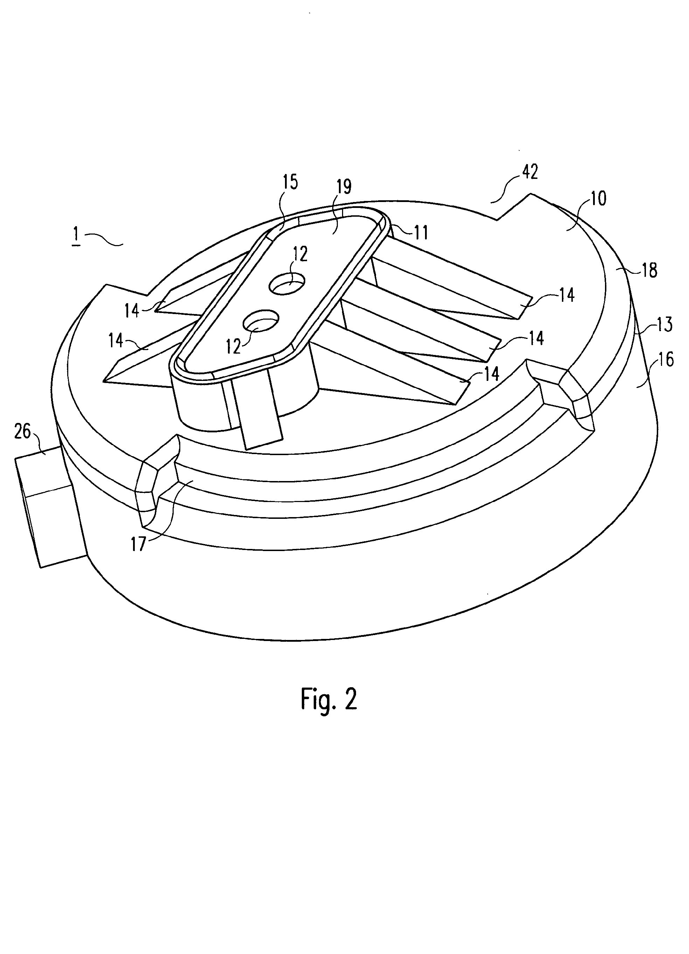

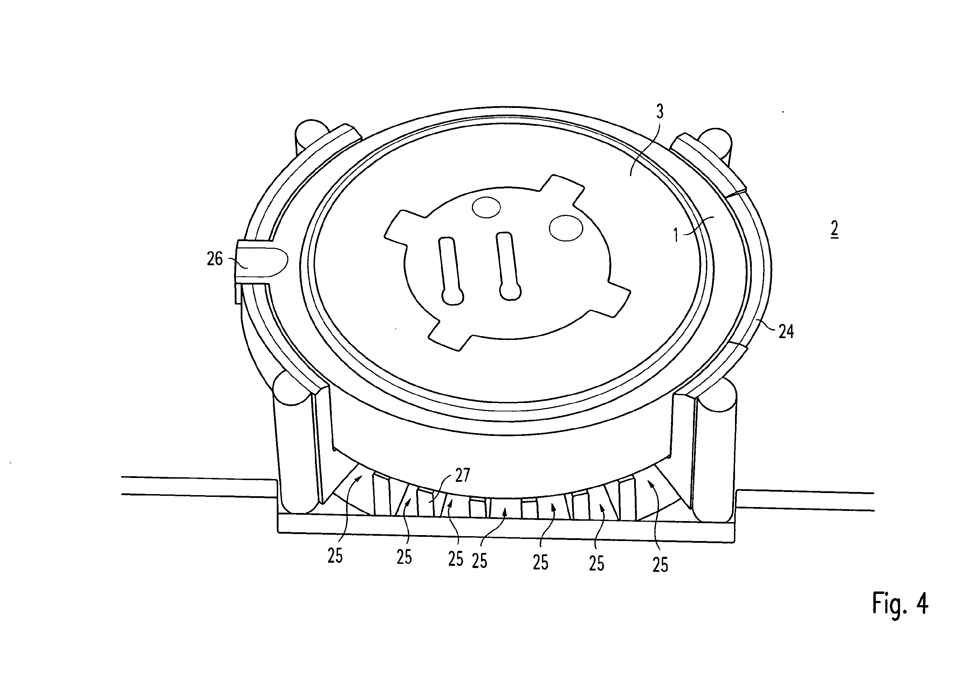

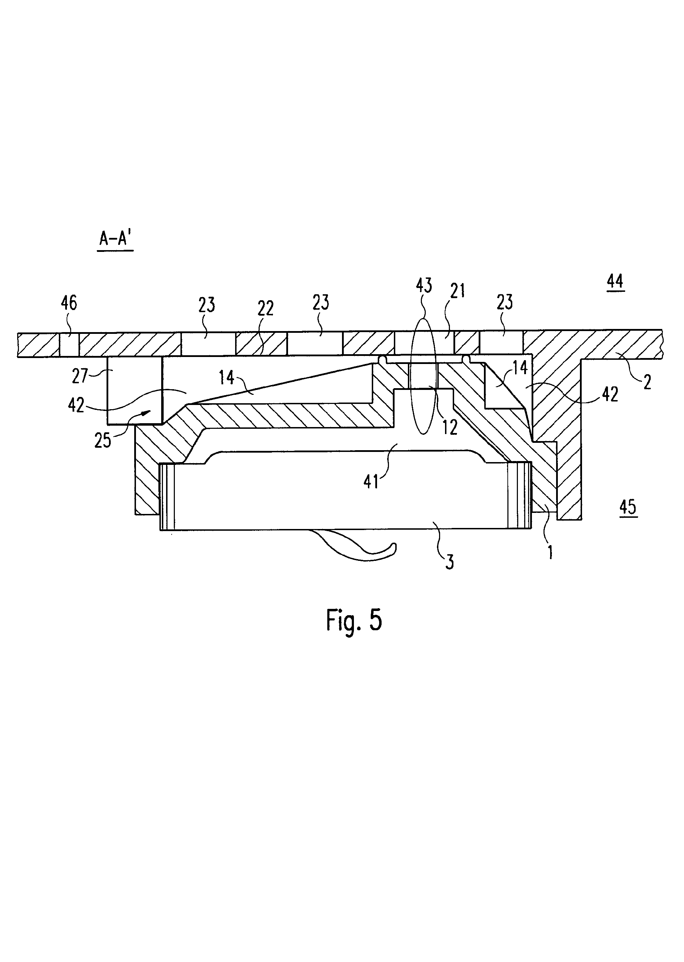

Fig. 2 shows the front-side of a grommet 1 according to a preferred embodiment of the present invention. As constituent of an earpiece, the grommet 1 is inserted in the casing shell 2 of a mobile communication device such, that the plane 10 faces the inner surface of the casing shell 2. The electrodynamic transducer 3, usually a speaker capsule, is further inserted into the backside of the grommet 1 to complete the earpiece assembly. In the following, the term speaker capsule will always be used as a synonym for an electrodynamic transducer. The positions of the casing shell 2, the speaker capsule 3 and the grommet 1 relative to each other when assembled are shown in Figure 4 and 5.

Referring to Fig. 2, the surface 10 of the grommet 1 comprises an elevation 11 with a top-plane 19 being about parallel to the main-plane of surface 10. The shape of the perimeter of the elevation 11 is adapted to cap the one or more acoustic openings 21 of the casing shell 2 in the assembled state of the earpiece. Openings 12 are provided through the top-plane of the elevation 11 forming a passage from the interior of grommet 1 to the top-surface 19 of the grommet 1.

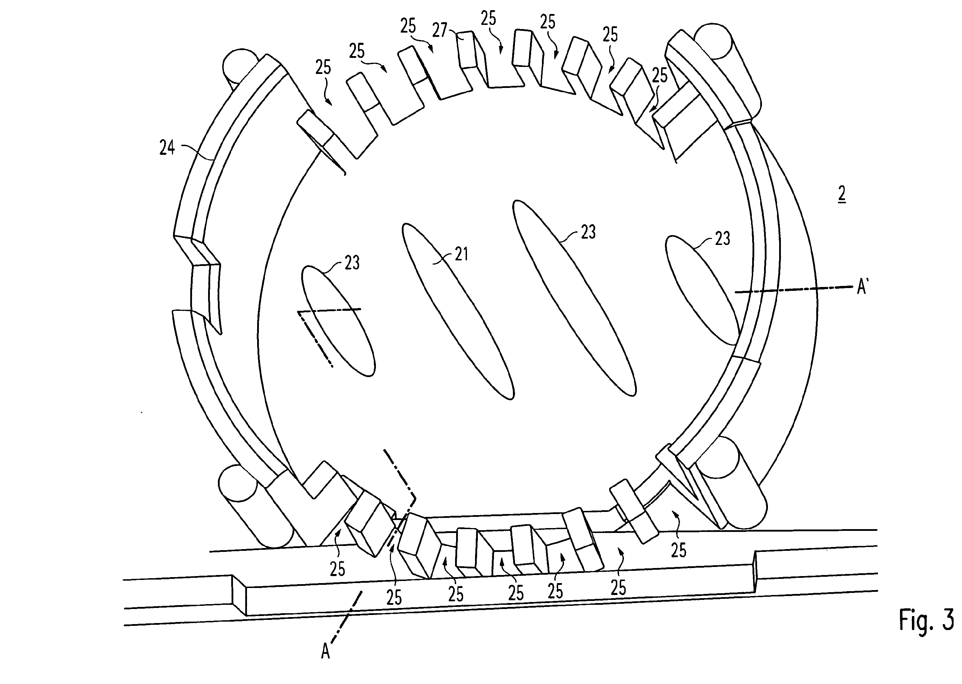

When the grommet 1 is placed in the receptacle 24 (see Fig. 3) on the inner side of the casing shell 2, the elevation 11 obturates the one or more acoustic openings 21 from the environs inside the casing shell hereby providing a straight passage 43 (see Fig. 5) from the interior of the grommet 41 to the outside 44 of the casing shell and simultaneously blocking any acoustic bypasses. Such, the sound generated by the electrodynamic transducer 3 is directly guided through this sound outlet 43 to the outside 44 of the casing and finally the users ear, so that losses in the acoustic power due to leaks, bypasses or long propagation lines are avoided.

To achieve a more reliable acoustic sealing of the sound outlet 43 to the inner environs of the casing 45, the elevation 11 is equipped with a sealing rib 15. The use of a sealing rib further minimises the forces necessary to obtain a good obturation of the sound outlet. In a view from above, the sealing rib describes a closed loop with the encircled area being at least the area necessary to take in the acoustic openings of the casing shell and the openings 12 through the top-surface 19 of the elevation 11. Preferably, the sealing lip 15 is placed at a certain distance from the perimeter of the elevation 11 so that it is mechanically supported by the side-wall of the elevation 11 avoiding any deformation of its geometrical baseline. The cross sectional profile of the sealing lip 15 shows a tapered characteristic to the top of the sealing lip. This is can e.g. be implemented by an in first order triangular design of the sealing lips the cross section, whereby the steepness of the inner flank may be different from that of the outer flank to predefine the deformation when the sealing lip 15 is pressed against the inner surface of the casing shell 2. The top edge of the triangular cross-section is advantageously smoothed off to make sure the lip shares only a minimal area with the casing shell when pressed against it. It is to be understood that any geometry promising a tight contact of the sealing lip 15 to the casing shell 2 at small forces of pressure, like e.g. a dome-alike or shark-fin-alike geometry can be used instead of the triangular geometry. Alternatively to the described, the sealing rib may be carried out as a prolongation of the side walls with the pointed end directed away from the elevation resembling a form of a suction cap.

In a preferred embodiment of the present invention, the grommet is made from an elastic material or at least particularly elastic to serve as an absorptive attenuator for vibrations generated by the speaker capsule. This further simplifies the constructive requirements for the sealing lip 15.

The force applied to the elevation 11 of the grommet 1 in an assembled state of the earpiece will dent the main surface 10 of the grommet. The indentation caused is minimised by taking appropriate constructive stiffening measures, like e.g. varying the thickness of the wall underneath the surface 10 with the distance from the elevation 11. Another approach is to use stiffening elements like stiffening ribs 14, as shown in Fig. 2. The stiffening ribs 14 start at the side walls of the elevation and extend to the perimeter of the grommet. The height of the stiffening ribs may vary with the distance from the elevation. Also the thickness of the ribs and/or the clearance between the ribs may vary according to their position on the surface 10. Further, a clearance between the stiffening ribs comprises no necessary constructive element, so that the stiffening element may also look like a slope to the top surface 19 of the elevation 11.

As can be seen from Fig. 3, leak openings 23 are positioned at the side of the acoustic opening 21 in the casing shell 2. The elevation 11 keeps the main area of the surface 10 at a certain distance to the inner surface of the casing shell 2, so that the outside 44 of the casing shell 2 is acoustically connected through that leak openings 23 to the void 42 surrounded by the inner surface of the casing shell, the walls of the receptacle 24 and the surface 10 of the grommet. Recessions 17 at the perimeter edge of the grommet 1 provide a passageway to the environs inside the casing shell. Thus, an acoustic return path formed by the leak openings 23, the void 42 and the recessions 17 reduces the acoustic load by linking the backside of the speaker capsule to the outside 44 of the casing shell above the area of the earpiece.

In a mounted state, a force is exerted to the contact springs of the electrodynamic transducer for a secure electrical contact. This compressive force is also exerted to the sealing rib 15. Especially, when the grommet 1 is made from elastic material, the resulting compression of the grommet will cause a deformation of the grommet so that its outer walls 16 tend to bend outwards. This would result in a deformation of the geometry of cavity 41 resembling the acoustic filter and thus cause a distortion of the acoustic properties of the earpiece. The receptacle 24 formed on the inner surface of the casing shell 2 therefore comprises side walls, which support the grommet 1 over a substantial part of its circumference to ensure the dimensional stability of the acoustic filter.

At least one opening in the side walls of the receptacle 24 provides an entryway 25 from the inner environs 45 of the casing to a passage through the recessions 17 leading to the void 42. Due to the geometry of the grommet 1 with the recessions placed at the edge of the perimeter of surface 10, those openings are to be placed close to the inner main surface of the casing shell 2 or, with respect to the representation of Figure 3 close to the bottom of the side walls of the receptacle 42. For ease of production, those openings do not have to be formed as holes in the side walls, but may be formed by the side walls encircling only a part of the grommets circumference big enough to ensure a sufficient dimensional stability of the grommet. Further, spacers 27 support the grommet at the recessions 17, for one to avoid a bending of the surface 10 of the grommet by the above mentioned compressive force, and also to prevent a deformation of the grommet's 1 perimeter along the recessions 17 which has also to be dreaded when compressing the grommet 1.

Preferably those spacers 27 are equally spaced along the recessions 17, whereby breadth, clearance and length of the spacers are calculated to achieve the desired acoustic impedance of the acoustic return path. The clearance between any two spacers provides an entryway 25 from the interior of the casing to the void 42. The height of the spacers is adjusted to limit the depth of insertion for the grommet. This may further be accompanied by additional spacers of appropriate height along the inner perimeter of the side walls of the receptacle 42 or an accordingly constructed step on the inner side of the side walls. Both measures further define the distortion of the sealing rib 15 by determining the distance of the top surface 19 of the grommet 1 to the inner surface of the casing shell 2.

Eventually, a correct assembly of the parts forming the earpiece is to be considered. The circular design of the earpiece is reflected by the circular design of the grommet 1 and the receptacle 24 of the casing shell 2. But the grommet has to be inserted into the receptacle 24 at a certain and exact angular orientation to ensure a proper obturation of the acoustic opening 21 in the casing shell 2 as well as an exact orientation of the recessions 17 of the grommet 1 to the entryways 25 along the receptacle 24. Therefore, the circumference is equipped with rotationally asymmetric features that allow an exact position of the grommet during assembly. For this reason, the outer wall 16 of the grommets 1 circumference is equipped with an appendix 26 as can be seen in Fig. 2. This appendix is intended to fit in a recession of a side wall of the receptacle 24, which is shown Fig. 3. The assembly drawing of Fig. 4 shows how the appendix 26 fitting in the recession of the receptacle 24 provides the means for rotationally aligning the grommet 1 in the receptacle 24.

Alternative measures for providing rotationally asymmetric features are the provision of one or more recessions 17 arranged rotationally asymmetric around the perimeter of the grommet 1, and for which respective spacers 27 are provided on the casing shell 2 to interlock for proper positioning. Further, the asymmetric adjustment feature may also be resembled by rotationally non symmetric bevelments 18 of parts of the edge of the grommets 1 circumference or by a notch in the grommet fitting into a respective nose provided at the receptacle 24.

In Fig. 5 the assembled earpiece is shown in a cross-sectional view. The cavity 41 forms the acoustic filter with a defined sound outlet formed by the inner walls of the elevation 11 in conjunction with the openings 12 through the surface 19 of the elevation 11 and the acoustic openings 21 in the casing shell 2. The filter properties of the cavity 41 are defined by the geometry of the cavity. To prevent the speaker capsule from sliding to far into the grommet thereby unbalancing the filter characteristics, the inner wall of the grommets side walls comprises a step-like element for a limit stop.

For further improving the leak tolerance of the overall earpiece construction, a leak channel may be formed by providing a leak opening 46 in the casing shell 2 outside the receptacle 24, so that the void 42 is linked through the entryways 25 and the inner environs of the casing to the region outside the casing and outside the area, which is usually capped by an user's ear when pressed against the earpiece.

The earpiece according to the present invention offers an excellent leak tolerance and a low acoustic impedance whereby the number of parts forming the earpiece has been reduced compared to the prior art. This was made possible by specially shaping the grommet 1 usually only used to accommodate the speaker capsule 3 in conjunction with the receptacle formed on the casing shell 2. The constructive elements relevant for achieving the desired acoustic properties are directly moulded into the shape of elements indispensable for an earpiece. According to this, the total number of parts could be reduced to three, whereby the modifications to the casing shell and the grommet cause no extra effort. This reduces the production cost, which is further supported by the simplified assembly especially together with the asymmetric constructive elements provided with the grommet 1 and the receptacle 24.

## Claims

1. A mobile communication device (100) comprising
a casing shell (2),
an electrodynamic transducer (3) for generating acoustic signals mounted inside said casing shell, and
a grommet (1) for mechanically decoupling said electrodynamic transducer from said casing shell,
whereby said casing shell comprises at least one acoustic opening (21) for allowing acoustic signals generated by said electrodynamic transducer to pass through to the outside (44) of the casing shell,
**characterised in**
**that** grommet (1) is shaped to form a cavity (41) together with said electrodynamic transducer (3) for constituting an acoustic filter, and to form at least one acoustic leadthrough (17) for an acoustic connection between leak openings (23) of the casing shell (2) and an interior of the casing shell.

2. A mobile communication device according to claim 1,
**characterised in**
**that** said leak openings (23) are at least partly inside the area of a projection of said electrodynamic transducer (3) perpendicularly to its front surface onto the inner surface of said casing shell (2).

3. A mobile communication device according to claim 1 or 2,
**characterised in**
**that** the surface (10) of said grommet (1) facing an inner surface (22) of said casing shell comprises an elevation (11) protruding from it and accommodating at least one opening (12) to form an acoustic passage from said cavity (41) to an acoustic opening (21) in said casing shell (2).

4. A mobile communication device according to claim 3,
**characterised in**
**that** said elevation (11) of said grommet (1) is shaped to obturate the sound outlet (43) formed by said one or more openings (12) in said elevation (11) and said one or more acoustic openings (21) in said casing (2) shell from the environs inside (45) said casing shell.

5. A mobile communication device according to claim 3 or 4,
**characterised in**
**that** said elevation (11) of said grommet (1) represents a spacer for keeping the non-elevated part of the surface (10) of the grommet facing the inner surface (22) of the casing shell (2) at a distance to said inner surface (22).

6. A mobile communication device according to one of the claims 1 to 5,
**characterised in**
**that** said grommet (1) is made of material with elastic properties.

7. A mobile communication device according to one of the claims 1 to 6,
**characterised in**
**that** the inner surface (22) of said casing shell is shaped to form a receptacle (24) supporting the grommet on at least a part of its circumference (13, 16).

8. A mobile communication device according to one of the claims 1 to 7,
**characterised in**
**that** that the inner surface (22) of said casing shell (2) is shaped to form a receptacle providing one or more entryways (25) to said leadthroughs (17) of said grommet (1).

9. A mobile communication device according to claim 8,
**characterised in**
**that** said entryways (25) are shaped to form an acoustic impedance.

10. A mobile communication device according to one of the claims 1 to 9,
**characterised in**
**that** the surface (10) of said grommet (1) facing the inner surface (22) of said casing shell (2) comprises stiffening elements (14) for improving the inherent stability of said cavity (41) formed by said grommet (1) together with said electrodynamic transducer (3) mounted to it.

11. A mobile communication device according to one of the claims 1 to 10,
**characterised in**
**that** said elevation (11) of said surface (10) of the grommet facing the inner surface (22) of said casing shell (2) comprises a sealing lip (15) encompassing the openings (12, 21) forming the sound outlet (43).

12. A mobile communication device according to claim 11,
**characterised in**
**that** said sealing lip (15) is shaped to provide a pliable contact to the inner surface (22) of said casing shell (2).

13. A mobile communication device according to one of the claims 1 to 12,
**characterised in**
**that** the outer side wall (16) rimming said grommet comprises one or more rotationally asymmetric features (18, 26, 17).

14. A mobile communication device according to claim 13,
**characterised in**
**that** said rotational asymmetric feature is implemented by an appendix (26).

15. A mobile communication device according to claim 13 or 14,
**characterised in**
**that** said one or more rotational asymmetric features are implemented by one or more recesses arranged rotationally asymmetric around the perimeter said outer side wall (16) rimming said grommet (1).

16. A mobile communication device according to one of the claims 13 to 15,
**characterised in**
**that** said one or more rotational asymmetric features are implemented by a notch and/or a bevelment (18) of part of an edge of the circumference.
